# EUROPEAN PATENT SPECIFICATION

(11) **EP 4 177 484 B1**
(45) Date of publication and mention of the grant of the patent: **07.10.2026**
(21) Application number: 21206964.5
(22) Date of filing: 08.11.2021
(51) Int. Cl.: F16B 35/06

(54) **FASTENER FOR JOINING PARTS AND JOINT FORMED THEREWITH**
VERBINDUNGSELEMENT ZUM VERBINDEN VON TEILEN UND DAMIT HERGESTELLTE VERBINDUNG
DISPOSITIF DE FIXATION POUR L'ASSEMBLAGE DE PIÈCES ET ASSEMBLAGE AINSI FORMÉ

(43) Date of publication of application: 10.05.2023
(73) Proprietor: Airbus (S.A.S.), 31700 Blagnac (FR)
(72) Inventor: Herrles, Christian, 82024 Taufkirchen (DE)
(74) Representative: KASTEL Patentanwälte PartG mbB

(56) References cited:
- EP-A1- 3 108 149
- EP-A1- 3 283 304
- CN-A- 108 953 343
- CN-A- 111 306 170
- US-A1- 2010 196 119
- US-B1- 6 302 630
- US-B2- 8 651 413

## Description

The invention relates to joint formed with a fastener

In certain fields of technology, such as aeronautics, it is useful to have a strong connection between a sealant or cover layer, such as paint, coatings, adhesive films, or adhesive foils, and a fastener that is arranged underneath. However, vibration or other mechanical phenomena may move the fastener relative to the sealant or cover layer.

EP 3 108 149 A1 discloses a fastening device for tamper-proof fastening.

US 8 651 413 B2 discloses a lightning-protection fastener that is capable of reliably preventing peeling off of an insulation layer during the operation of an aircraft and improving the anti-lightning-strike capability and reliability.

CN 111 306 170 A discloses an anti-theft screw. The end face of the anti-theft screw head faces the connected piece and is provided with end face teeth. The teeth are meshed with the matched operating pliers to obtain a rotary driving force for assembly and disassembly, so that the anti-theft screw head can be prevented from being loosened due to illegal knocking.

CN 108 953 343 A discloses a fastener for tool-free dismounting.

EP 3 283 304 A1 discloses an antitheft locking device for vehicle wheels, comprising a cylindrical one-piece body provided at a first end with a thread and provided, at a second end opposite to the first end, with an axially extending cylindrical projection having a circular cross section and surrounded by a blind idly rotatable bushing, wherein the bushing comprises a hollow body having a circular inner cross section capable of rotatably engaging on said cylindrical projection and a non-circular outer cross section.

US 2010 / 0 196 119 A1 discloses an anti-theft fastening device comprising a bolt having a head portion and a threaded portion integrally formed with the head portion, a bottomed tubular bolt cover having an opening end, and a cap member closing the opening end of the bolt cover. The bolt cover has a through bore to have the threaded portion of the bolt pass through, a bottom portion abutting a bottom surface of the head portion of the bolt, and a grip portion projecting from an outer circumference of the bottom portion and surrounding a periphery of the head portion of the bolt. When the threaded portion of the bolt is screwed into a threaded groove of the transmission case, the bottom portion of the bolt cover is interposed between the bottom surface of the head portion and each fastening portion of a bracket portion.

US 6 302 630 B1 discloses a fastening device including a fastener and a recess insert retained within the head of the fastener. The fastener has a head at one end and a threaded shaft at the opposing end. The fastener head has an engagement recess and a concentric counter-bored section. The counter-bored section has a greater diameter than the diameter of the engagement recess and extends into the fastener head less than the depth of the engagement recess. The counter-bored section includes an insert retainer. The insert has a fastener retainer and is adapted to fit within the fastener head counter-bored section.

It is the object of the invention to provide an improved fastener that reduces the risk of damage to an adjacent surface, like a sealant or cover layer.

The object is achieved by the subject-matter of the independent claim. Preferred embodiments are subject-matter of the dependent claims.

The invention provides a joint comprising a first aircraft part joined to a second aircraft part by a fastener and a cover layer that covers the fastener and is coated onto a surface of the first aircraft part, wherein the fastener has a fastener head portion and a fastener shank portion, wherein the fastener head portion is configured such that upon rotation of the fastener shank portion relative to any of the first and second aircraft parts, transmission of torque through the fastener head portion to an adjacent member is prevented, wherein the fastener head portion comprises a rotatable member that is supported, so as to be rotatable relative to the fastener shank portion, wherein the cover layer is adjacent to the rotatable member, wherein the rotatable member is immovable relative to the cover layer, wherein the rotatable member includes an adhesive surface that is arranged on a side facing away from the fastener shank portion, wherein the adhesive surface is adhesively bonded to the cover layer.

Preferably, the fastener head portion comprises a stationary member that is configured to be immovable relative to the fastener shank portion about its longitudinal axis, and the rotatable member is attached to the stationary member.

Preferably, the rotatable member is supported, so as to prevent axial movement of the rotatable member.

Preferably, the fastener head portion comprises a stationary member that is configured to be immovable relative to the fastener shank portion about its longitudinal axis, and the rotatable member is attached to the stationary member.

Preferably, the rotatable member is supported by the stationary member.

Preferably, the stationary member is integrally formed as a unitary member with the fastener shank.

Preferably, the fastener head portion comprises an engaging portion for a tool to drive the fastener.

Preferably, the stationary member is positively engaged with the engaging portion, so as to prevent rotation of the stationary member relative to the fastener shank portion.

Preferably, the rotatable member is supported in a sliding manner, preferably by the stationary member.

The adhesive surface may provide good adhesive properties to meet the requirements for bonding, coating, etc. Preferably, the adhesive surface includes a surface structure or surface modification that is configured to provide or increase an adhesive bond with a sealant, coating, adhesive film or adhesive foil. Preferably, the adhesive surface is adhesively bonded to a sealant, a coating, an adhesive film or adhesive foil.

Preferably, the rotatable member includes an attachment portion and the fastener head portion, preferably the stationary member, includes an attachment opening for receiving the attachment portion in a manner that prevents the rotatable member from being removed along an axial direction of the fastener.

Preferably, the fastener head portion, preferably the stationary member, includes an attachment portion and the rotatable member includes an attachment opening for receiving the attachment portion in a manner that prevents the rotatable member from being removed along an axial direction of the fastener.

Preferably, the attachment portion is formed as an annular portion and the attachment opening is formed as a corresponding annular groove.

Preferably, the fastener is configured as a rivet. Preferably, the fastener head portion forms an initial rivet head and the fastener shank portion forms a rivet shank, wherein the rivet shank comprises an end portion that is to be formed into a closing rivet head.

Preferably, the fastener is configured as a threaded fastener, the fastener shank portion comprising a thread. Preferably, a nut is threaded onto the fastener shank portion.

Preferably, the rotatable member is immovable relative to the cover layer.

Preferably, the adhesive surface includes a surface structure or surface modification that is configured to provide or increase an adhesive bond with a sealant, coating, adhesive film or adhesive foil. Preferably, the adhesive surface provides good adhesive properties to meet the requirements for bonding, coating, etc.

Preferably, the cover layer is a paint coating or a sealant.

Preferably, the rotatable member is arranged such that the rotatable member aligns with a surface of the first part or second part in a manner that is aerodynamically flat.

Preferably, upon rotation of the fastener shank portion, there is no force transfer via the fastener head portion to the cover layer.

One idea is to enhance a conventional fastener head with a separate part that is turnable. This turnable part is placed directly on top of the fastener head underneath. Usually there is no space between the parts; rather a sliding arrangement is preferred. Thus, in the enhanced fastener, there is no gap between the two separated parts. The two surfaces will slide on each other. Beyond that, the top surface of the turnable part is structured, modified or otherwise configured so as to exhibit a good adhesion to the sealant or coating. In one embodiment, the movable part has a shaft that is placed in the centre of the rivet. In another embodiment, the shaft is designed as a ring.

Unlike rivets, screws usually have some structure that allows engagement of a tool for driving the screw. One example is a cross slot in the fastener head. In one embodiment an adapter is used, which can be attached or bonded to the cross slot. This adapter includes two parts, one part which is fixed to the screw and another part which is turnable. Beyond that, the top surface of the turnable part has a good adhesion to the sealant or coating.

Embodiments of the invention are described in more detail with reference to the accompanying schematic drawings that are listed below
- Fig. 1: depicts a cross-section of a first embodiment of a fastener;
- Fig. 2: depicts a cross-section of a second embodiment of a fastener;
- Fig. 3: depicts a cross-section of a third embodiment of a fastener;
- Fig. 4: depicts a top view of the fastener of Fig. 3; and
- Fig. 5: depicts an embodiment of a joint.

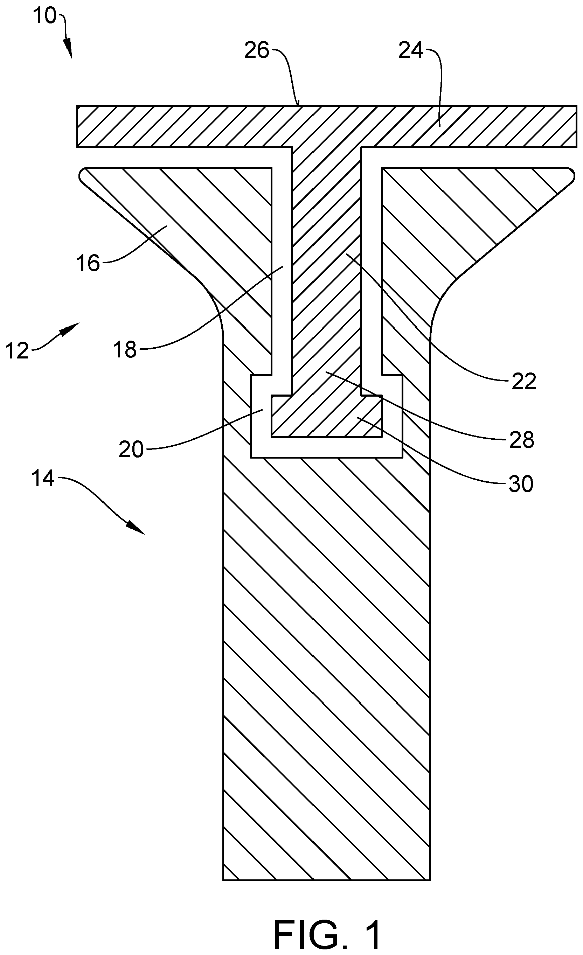

Referring to Fig. 1, a fastener 10 comprises a fastener head portion 12 and a fastener shank portion 14. The fastener head portion 12 has a tapered, spheroidal or other shape that is typically used.

The fastener head portion 12 includes a stationary member 16. The stationary member 16 is integrally formed with the fastener head portion 12 and includes an attachment opening 18 that extends along the longitudinal axis of the fastener 10. The attachment opening 18 may include a cavity 20 at its closed end.

The fastener head portion 12 includes a rotatable member 22. The rotatable member 22 is rotatably supported by the stationary member 20. The rotatable member 22 is rotatable relative to the stationary member 20.

The rotatable member 22 includes a surface portion 24. The surface portion 24 is preferably planar. The surface portion 24 is shaped so as to cover the entire stationary member 20, when viewed from the top.

The surface portion 24 comprises an adhesive surface 26. The adhesive surface 26 is configured to adhesively bond with sealant, paint, or other coatings such as other adhesive films or adhesive foils, as the case may be.

The rotatable member 22 may include an attachment portion 28. The attachment portion 28 extends in a longitudinal direction. The attachment portion 28 is preferably integrally formed with the surface portion 24. The attachment portion 28 may comprise a mounting member 30 at its end that is opposite the surface portion 24. The attachment portion 28 is inserted into the attachment opening 18 and held therein in a rotatable manner. The rotatable member 22 is prevented from being pulled along the longitudinal axis by positive locking, for example.

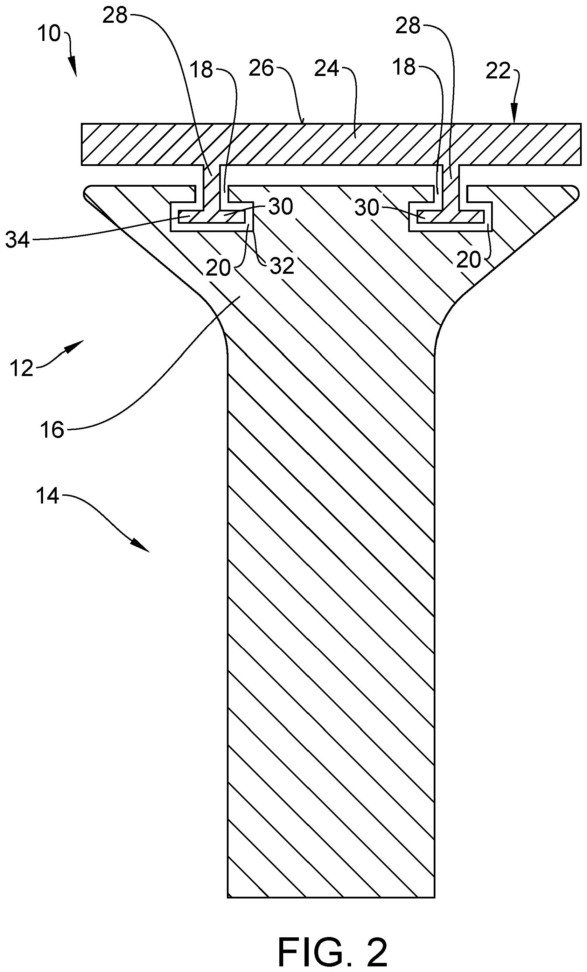

According to Fig. 2, another embodiment of a fastener 10 is described insofar as it differs from the previous embodiment. In this embodiment, the attachment opening 18 is formed as an annular groove 32. The cavity 20 is also annularly formed at the bottom end of the annular groove 32. Correspondingly, the attachment portion 28 is configured as an annular portion 34 that matches the shape of the annular groove 32 and cavity 20.

It should be noted that in variant that is not depicted for sake of brevity, the attachment opening 18 may be formed in the rotatable member 22, whereas the attachment portion 28 is formed on the fastener head portion 12.

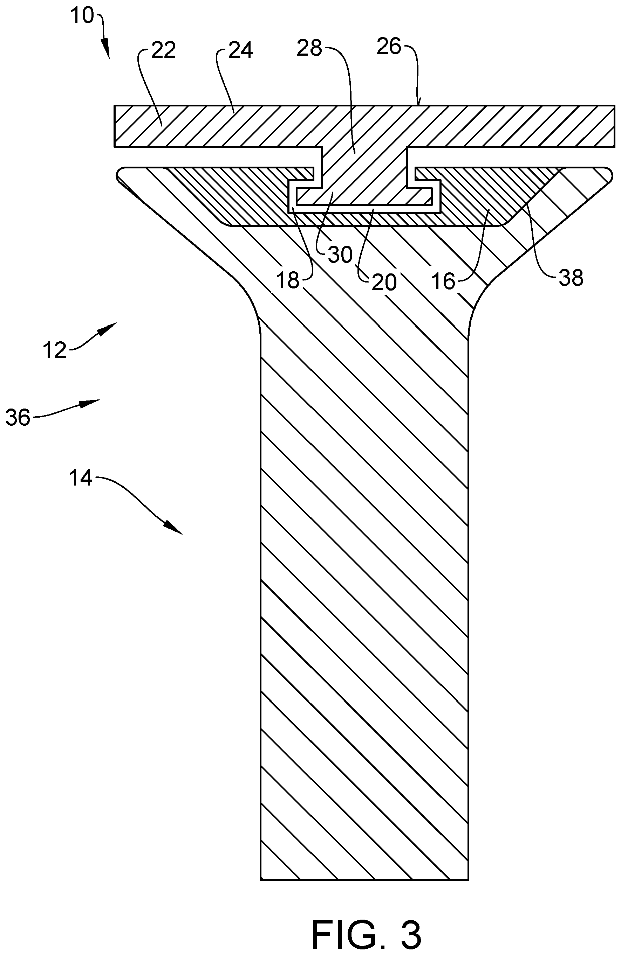

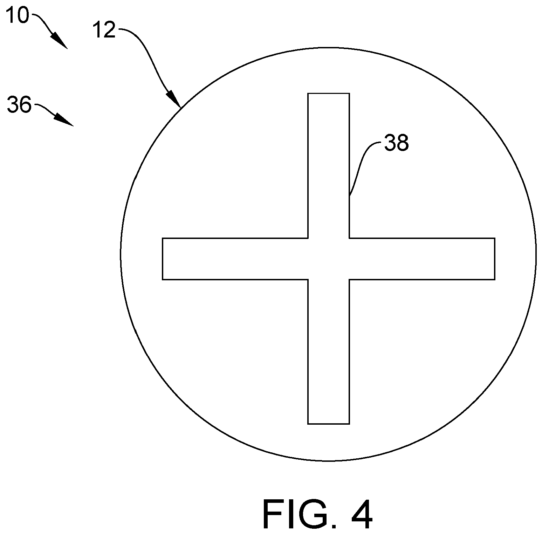

While in the previous embodiments, the fastener 10 was preferably configured as a rivet, in the embodiment according to Fig. 3 and Fig. 4, the fastener 10 is configured as a threaded fastener 36.

The fastener head portion 12 includes an engaging portion 38 for a tool to drive the fastener 10. The engaging portion 38 may be cross-shaped for example. Any other common shape is also possible, provided it allows driving of the fastener 10 with a tool. In contrast to the previous embodiments, the stationary member 16 is a separate member that is affixed to the engaging portion 38. This my be done by adhesive bonding or mechanical connection or both. While in Fig. 4, the stationary member 16 is illustrated as in the first embodiment, it is also possible to implement the annular shapes of the second embodiment, provided the engaging portion 38 leaves enough space.

The mechanism that enables a fixation of the rotatable member 22 when tightening the fastener 10 can be loosely compared to the one found on chemical bottles (such as household bleach). Here, the rotatable member 22 can be rotated loosely. When the rotatable member 22 is pressed against the fastener 10, they can be rotated together for fastening.

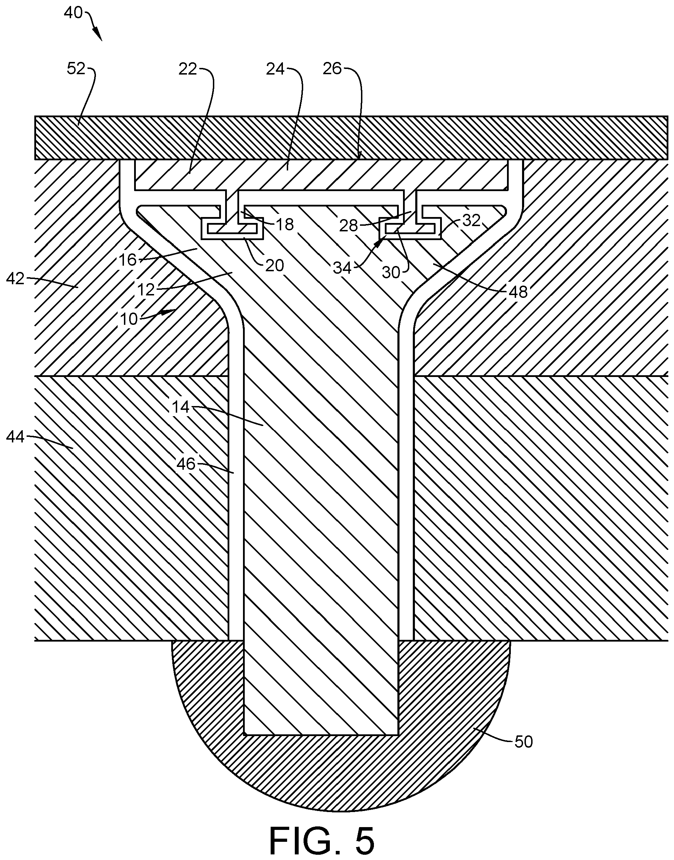

With reference to Fig. 5, assembly of a joint 40 and functioning of the fastener 10 is explained. A first aircraft part 42 and a second aircraft part 44 are to be joined by fastener 10. The first and second parts 42, 44 include an opening 46 in which the fastener 10 can be inserted. The opening 46 is shaped such that the rotatable member 22 aligns with the surface of the first aircraft part 42. The fastener 10 protrudes through the opening 46 and extends beyond the surface of the second aircraft part 44. Here, the fastener 10 is configured as a rivet so that the fastener head portion 12 is an initial rivet head 48. The protruding portion of the fastener 10 is formed into a closing rivet head 50 in a manner known per se, so as to join the first and second parts 42, 44.

Finally, the surface of the first aircraft part 42 is coated with a cover layer 52 of paint or sealant, as the case may be. The cover layer 52 and the rotatable member 22 adhesively bond to each other.

Now, if the fastener 10 rotates, for example due to vibration, the fastener shank portion 14 rotates relative to the rotatable member 22. As a result, the rotation and hence the torque are not transmitted into the cover layer 52. Thereby, the risk for damage to the cover layer 52 is reduced.

### List of reference signs:

- 10: fastener
- 12: fastener head portion
- 14: fastener shank portion
- 16: stationary member
- 18: attachment opening
- 20: cavity
- 22: rotatable member
- 24: surface portion
- 26: adhesive surface
- 28: attachment portion
- 30: mounting member
- 32: annular groove
- 34: annular portion
- 36: threaded fastener
- 38: engaging portion
- 40: joint
- 42: first part
- 44: second part
- 46: opening
- 48: initial rivet head
- 50: closing rivet head
- 52: cover layer

## Claims

1. A joint (40) comprising a first aircraft part (42) joined to a second aircraft part (44) by a fastener (10) and a cover layer (52) that covers the fastener (10) and is coated onto a surface of the first aircraft part (42), wherein the fastener (10) has a fastener head portion (12) and a fastener shank portion (14), **characterized in that** the fastener head portion (12) is configured such that upon rotation of the fastener shank portion (14) relative to any of the first and second aircraft parts (42, 44), transmission of torque through the fastener head portion (12) to an adjacent member is prevented, wherein the fastener head portion (12) comprises a rotatable member (22) that is supported, so as to be rotatable relative to the fastener shank portion (14), wherein the cover layer (52) is adjacent to the rotatable member (22), wherein the rotatable member (22) is immovable relative to the cover layer (52), wherein the rotatable member (22) includes an adhesive surface (26) that is arranged on a side facing away from the fastener shank portion (14), wherein the adhesive surface (26) is adhesively bonded to the cover layer (52).

2. The joint (40) according to claim 1, wherein the fastener head portion (12) comprises a stationary member (16) that is configured to be immovable relative to the fastener shank portion (14) about its longitudinal axis, and the rotatable member (22) is attached to the stationary member (16).

3. The joint (40) according to claim 2, wherein the stationary member (16) is integrally formed as a unitary member with the fastener shank portion (14) or wherein the fastener head portion (12) comprises an engaging portion (38) for a tool to drive or at least partially deform the fastener (10), and the stationary member (16) is positively engaged with the engaging portion (38), so as to prevent rotation of the stationary member (16) relative to the fastener shank portion (14).

4. The joint (40) according to any of the preceding claims, wherein the rotatable member (22) is supported in a sliding manner.

5. The joint (40) according to any of the preceding claims, wherein the rotatable member (22) includes an attachment portion (28) and the fastener head portion (12) includes an attachment opening (18) for receiving the attachment portion (28) in a manner that prevents the rotatable member (22) from being removed along an axial direction of the fastener (10), or wherein the fastener head portion (12) includes an attachment portion (28) and the rotatable member (22) includes an attachment opening (18) for receiving the attachment portion (28) in a manner that prevents the rotatable member (22) from being removed along an axial direction of the fastener (10).

6. The joint (40) according to claim 5, wherein the attachment portion (28) is formed as an annular portion (34) and the attachment opening (18) is formed as a corresponding annular groove (32).

7. The joint (40) according to any of the preceding claims, wherein the fastener (10) is configured as a rivet or wherein the fastener (10) is configured as a threaded fastener, the fastener shank portion (14) comprising a thread.

8. The joint (40) according to claim 1, wherein the cover layer (52) is a paint coating, a sealant, a film or a foil, or an adhesive film or an adhesive foil.

9. The joint (40) according to claim 8, wherein the rotatable member (22) is arranged such that the rotatable member (22) aligns with a surface of the first aircraft part (42) or second aircraft part (44) in a manner that is aerodynamically flat.

## Patentansprüche

1. Verbindung (40), umfassend ein erstes Luftfahrzeugteil (42), das über ein Befestigungselement (10) mit einem zweiten Luftfahrzeugteil (44) verbunden ist, sowie eine Deckschicht (52), die das Befestigungselement (10) bedeckt und auf eine Oberfläche des ersten Luftfahrzeugteils (42) aufgebracht ist , wobei das Befestigungselement (10) einen Befestigungselement-Kopfabschnitt (12) und einen Befestigungselement-Schaftabschnitt (14) aufweist, **dadurch gekennzeichnet, dass** der Befestigungselement-Kopfabschnitt (12) so ausgebildet ist, dass bei einer Drehung des Befestigungselement-Schaftabschnitts (14) relativ zu einem des ersten und des zweiten Luftfahrzeugteils (42, 44) eine Drehmomentübertragung über den Befestigungselement-Kopfabschnitt (12) auf ein angrenzendes Element verhindert wird, wobei der Befestigungselement-Kopfabschnitt (12) ein drehbares Element (22) umfasst, das so gelagert ist, dass es relativ zum Befestigungselement-Schaftabschnitt (14) drehbar ist, wobei die Deckschicht (52) an das drehbare Element (22) angrenzt, wobei das drehbare Element (22) relativ zur Deckschicht (52) unbeweglich ist, wobei das drehbare Element (22) eine Klebefläche (26) aufweist, die auf einer vom Befestigungselement-Schaftabschnitt (14) abgewandten Seite angeordnet ist, wobei die Klebefläche (26) mit der Deckschicht (52) verklebt ist.

2. Verbindung (40) nach Anspruch 1, wobei der Befestigungselement-Kopfabschnitt (12) ein feststehendes Element (16) umfasst, das so ausgebildet ist, dass es relativ zum Befestigungselement-Schaftabschnitt (14) um dessen Längsachse unbeweglich ist, und das drehbare Element (22) an dem feststehenden Element (16) angebracht ist.

3. Verbindung (40) nach Anspruch 2, wobei das feststehende Element (16) einstückig als ein einheitliches Element mit dem Befestigungselement-Schaftabschnitt (14) ausgebildet ist oder wobei der Befestigungselement-Kopfabschnitt (12) einen Eingriffabschnitt (38) für ein Werkzeug zum Eintreiben oder zumindest teilweisen Verformen des Befestigungselements (10) umfasst und das feststehende Element (16) formschlüssig mit dem Eingriffabschnitt (38) in Eingriff steht, um eine Drehung des feststehenden Elements (16) relativ zum Befestigungselement-Schaftabschnitt (14) zu verhindern.

4. Verbindung (40) nach einem der vorhergehenden Ansprüche, wobei das drehbare Element (22) gleitend gelagert ist.

5. Verbindung (40) nach einem der vorhergehenden Ansprüche, wobei das drehbare Element (22) einen Anbringungsabschnitt (28) umfasst und der Befestigungselement-Kopfabschnitt (12) eine Anbringungsöffnung (18) zur Aufnahme des Anbringungsabschnitts (28) derart umfasst, dass ein Entfernen des drehbaren Elements (22) entlang einer axialen Richtung des Befestigungselements (10) verhindert wird, oder wobei der Befestigungselement-Kopfabschnitt (12) einen Anbringungsabschnitt (28) umfasst und das drehbare Element (22) eine Anbringungsöffnung (18) zur Aufnahme des Anbringungsabschnitts (28) derart umfasst, dass ein Entfernen des drehbaren Elements (22) entlang einer axialen Richtung des Befestigungselements (10) verhindert wird.

6. Verbindung (40) nach Anspruch 5, wobei der Anbringungsabschnitt (28) als ringförmiger Abschnitt (34) ausgebildet ist und die Anbringungsöffnung (18) als entsprechende Ringnut (32) ausgebildet ist.

7. Verbindung (40) nach einem der vorhergehenden Ansprüche, wobei das Befestigungselement (10) als Niete ausgebildet ist oder wobei das Befestigungselement (10) als Schraubbefestigungselement ausgebildet ist, wobei der Befestigungselement-Schaftabschnitt (14) ein Gewinde umfasst.

8. Verbindung (40) nach Anspruch 1, wobei die Deckschicht (52) eine Lackbeschichtung, ein Dichtungsmittel, ein Film oder eine Folie oder ein Klebefilm oder eine Klebefolie ist.

9. Verbindung (40) nach Anspruch 8, wobei das drehbare Element (22) so angeordnet ist, dass sich das drehbare Element (22) aerodynamisch flach mit einer Oberfläche des ersten Luftfahrzeugteils (42) oder des zweiten Luftfahrzeugteils (44) ausrichtet.

## Revendications

1. Joint (40) comprenant une première partie d'aéronef (42) reliée à une seconde partie d'aéronef (44) par un dispositif de fixation (10) et une couche de recouvrement (52) qui recouvre le dispositif de fixation (10) et est appliquée sur une surface de la première partie d'aéronef (42), le dispositif de fixation (10) comportant une partie tête de dispositif de fixation (12) et une partie tige de dispositif de fixation (14), **caractérisé en ce que** la partie tête de dispositif de fixation (12) est conçue de sorte que lors de la rotation de la partie tige de dispositif de fixation (14) par rapport à l'une quelconque des première et seconde parties d'aéronef (42, 44), la transmission du couple à travers la partie tête de dispositif de fixation (12) à un élément adjacent soit empêchée, la partie tête de dispositif de fixation (12) comprenant un élément rotatif (22) qui est supporté, de sorte à pouvoir tourner par rapport à la partie tige de dispositif de fixation (14), la couche de recouvrement (52) étant adjacente à l'élément rotatif (22), l'élément rotatif (22) étant immobile par rapport à la couche de recouvrement (52), l'élément rotatif (22) comprenant une surface adhésive (26) qui est disposée sur un côté tourné à l'opposé de la partie tige de dispositif de fixation (14), la surface adhésive (26) étant collée de manière adhésive à la couche de recouvrement (52).

2. Joint (40) selon la revendication 1, la partie tête de dispositif de fixation (12) comprenant un élément fixe (16) qui est conçu pour être immobile par rapport à la partie tige de dispositif de fixation (14) autour de son axe longitudinal, et l'élément rotatif (22) étant fixé à l'élément fixe (16).

3. Joint (40) selon la revendication 2, l'élément fixe (16) étant formé d'un seul tenant sous la forme d'un élément unitaire, la partie tige de dispositif de fixation (14) ou la partie tête de dispositif de fixation (12) comprenant une partie de mise en prise (38) pour un outil pour entraîner ou au moins partiellement déformer le dispositif de fixation (10), et l'élément fixe (16) venant en prise positivement avec la partie de mise en prise (38), de sorte à empêcher la rotation de l'élément fixe (16) par rapport à la partie tige de dispositif de fixation (14).

4. Joint (40) selon l'une quelconque des revendications précédentes, l'élément rotatif (22) étant supporté de manière coulissante.

5. Joint (40) selon l'une quelconque des revendications précédentes, l'élément rotatif (22) comprenant une partie de fixation (28) et la partie tête de dispositif de fixation (12) comprenant une ouverture de fixation (18) pour recevoir la partie de fixation (28) d'une manière qui empêche l'élément rotatif (22) d'être retiré le long d'une direction axiale du dispositif de fixation (10), ou la partie tête de dispositif de fixation (12) comprenant une partie de fixation (28) et l'élément rotatif (22) comprenant une ouverture de fixation (18) destinée à recevoir la partie de fixation (28) d'une manière qui empêche l'élément rotatif (22) d'être retiré le long d'une direction axiale du dispositif de fixation (10).

6. Joint (40) selon la revendication 5, la partie de fixation (28) étant formée comme une partie annulaire (34) et l'ouverture de fixation (18) étant formée comme une rainure annulaire (32) correspondante.

7. Joint (40) selon l'une quelconque des revendications précédentes, le dispositif de fixation (10) étant conçu en tant que rivet ou le dispositif de fixation (10) étant conçu en tant que dispositif de fixation fileté, la partie tige de dispositif de fixation (14) comprenant un filetage.

8. Joint (40) selon la revendication 1, la couche de recouvrement (52) étant un revêtement de peinture, un agent d'étanchéité, un film ou une feuille, ou un film adhésif ou une feuille adhésive.

9. Joint (40) selon la revendication 8, l'élément rotatif (22) étant disposé de sorte que l'élément rotatif (22) s'aligne avec une surface de la première partie d'aéronef (42) ou de la seconde partie d'aéronef (44) d'une manière qui est aérodynamiquement plate.
